# EUROPÄISCHE PATENTSCHRIFT

(11) **EP 1 916 252 B1**
(45) Veröffentlichungstag und Bekanntmachung des Hinweises auf die Patenterteilung: **05.11.2008**
(21) Anmeldenummer: 07118939.3
(22) Anmeldetag: 22.10.2007
(51) Int. Cl.: C07F 15/00

(54) **Platinkatalysator**
Platinum catalyst
Catalyseur de platine

(30) Priorität: 27.10.2006 DE 102006050863
(43) Veröffentlichungstag der Anmeldung: 30.04.2008
(73) Patentinhaber: Wacker Chemie AG, 81737 München (DE)
(72) Erfinder: Fehn, Armin, 84561, Mehring (DE)
(74) Vertreter: Gössmann, Christoph Tassilo

(56) Entgegenhaltungen:
- JOHNSON, B.F.G. ET AL.: "Metal beta-diketone complexes. Part V. The interaction of beta-diketones with diene complexes of palladium(II) and platinum(II)" JOURNAL OF THE CHEMICAL SOCIETY, A, 1968, Seiten 1993-2001, XP002463329

## Beschreibung

Für die Herstellung von Formkörpern, die in medizinischen Bereichen oder mit Lebensmitteln in Kontakt kommen, wie Backformen, Aufbewahrungsgefäße, sind hohe und in Bezug auf bestimmte Verunreinigungen spezielle Reinheitsanforderungen zu erfüllen.

So muss auch der Katalysator, der bei der Vernetzung der Formkörper eingesetzt wird, in medizinischen Bereichen oder die mit Lebensmitteln in Kontakt kommen, spezielle Reinheitsanforderungen erfüllen, insbesondere muss der Platinkatalysator eine hohe Reinheit aufweisen und der Platinkatalysators darf keine toxikologisch bedenkliche Verunreinigungen oder Nebenprodukte enthalten und muss dennoch wirtschaftlich herstellbar sein. Aus J. Chem Soc. (1968) 1993-2001 ist bekannt, dass Cycloocadien-PtCl₂ mit zwei moläquivalenten Thalliumacetylacetonat in Chloroform bei Raumtemperatur zu acaCODPtacac reagiert. Nach dem Rühren wird der Thalliumchloridniederschlag abfiltriert, das Filtrat zur Trockene eingedampft und das Produkt durch Umkristallisieren aus Petrolether erhalten. Es sind weder Angaben über die Ausbeute noch über die Reinheit des Produkts beschrieben.

Diese Literaturvorschrift ist betrieblich nicht zu verwerten, da zum einen das toxische Lösungsmittel Chloroform (R-Sätze: 22-38-40, 48/20/22) verwendet wird, und zum anderen, was noch schwerwiegender wiegt, die Verwendung von der sehr giftigen Verbindung Thalliumacetylacetonat (R: 26/28-33-51/53). Es kann nicht ausgeschlossen werden, dass noch restliche Thalliumverbindungen im Produkt verbleiben.

Aus J. of the Am. Chem. Soc. 92 (1970) 1274-1278 ist die Herstellung von 3(1-Acetyl-2-oxopropyl)bicyclo[2,2,1]hept-5-en-2-yl)-(2,4,pentanedionato-O,O')platin aus Dichloro(endobicyclopentadiene)platinum(II), Natriumcarbonat im molaren Überschuss und Acetylaceton im Überschuss bekannt. Dazu wird oben genannte Mischung 4 Tage bei Raumtemperatur gerührt. Anschließend wird das Natriumchlorid und Natriumcarbonat abfiltriert und das Filtrat zur Trockene eingedampft. Das resultierende Produkt wird über Säulenchromatographie in Dichlormethan gereinigt und anschließend aus Dichlormethan umkristallisiert. Die Ausbeute beträgt 55 %.

Die Vorschrift hat gravierenden Nachteile für die betriebliche Herstellung, wie lange Reaktionszeiten von 4 Tagen und die geringe Ausbeute. Zudem muss das Produkt durch Säulenchromatographie gereinigt werden.

Es ist daher Aufgabe der Erfindung den Stand der Technik zu verbessern, insbesondere einen Platinkatalysator zur Verfügung zu stellen, der für die Vernetzung von Formkörper, die in medizinischen Bereichen oder mit Lebensmitteln in Kontakt kommen, geeignet ist.

Gegenstand der Erfindung ist ein Verfahren zur Herstellung von Platin-1,3-diketoverbindungen, dadurch gekennzeichnet, dass eine Dichlorplatinverbindung und eine Diketoverbindung in einem Ketolösungsmittel 5 min bis 1 h bei unterhalb 0°C gerührt wird und das Reaktionsprodukt isoliert wird, vorzugsweise wird filtriert und das Lösungsmittel wird entfernt.

Vorzugsweise weist die Dichlorplatinverbindung einen aliphatischen oder cyclischen Diolefinrest auf. Besonders bevorzugt handelt es sich bei dem Rest um Norbornadien oder Cyclooctadien.

Die Diketoverbindung ist vorzugsweise eine der Formel:

R-(C=O)-(R"-CH=C(-O⁻)-R'

wobei
R Methyl, Ethyl, Phenyl, Allyl, R-O
R' Methyl, Ethyl, Phenyl, Allyl
R" Wasserstoff, Methly, Ethyl, Phenyl bedeuten kann.

Die Diketone sind vorzugsweise die Natrium- oder Kaliumsalze von Acetylacetonat, 2,4-(3-Methyl)pentandionat, 2,4-(3-Ethyl)pentandionat, 2,4-(3-Phenyl)pentandionat, 2,4-Hexandionat, 3,5-Heptandionat, 1,1,1- Trifluoro-2,4-Pentadionat, Hexafluoro-2,4-pentadionat.

Des weiteren können anstelle von Diketonaten auch Salze der Acetcarbonsäureester, wie vorzugsweise Acetessigsäuremethylester Natriumsalz, eingesetzt werden. Zudem kann anstelle des Diketonats auch eine Mischung aus Diketon (Acetylaceton, 2,4-(3-Methyl)pentandion, 2,4-(3-Ethyl)pentandion, 2,4-(3-Phenyl)pentandion, 2,4-Hexandion, 3,5-Heptandion, 1,1,1- Trifluoro-2,4-Pentadion, Hexafluoro-2,4-pentadion) in Kombination mit vorzugsweise Natriumcarbonat oder Acetocarbonsäureester, wie vorzugsweise Ethylacetoacetate, Methylacetoacetat in Kombination mit vorzugsweise Natriumcarbonat eingesetzt werden.

Bevorzugt handelt es sich bei der Diketoverbindung um die Kalium- oder Natriumsalze von 2,4-(3-Methyl)pentandionat, 2,4-(3-Phenyl)pentandionat, 3,5-Heptandionat, Kaliumacetylacetonat, Natriumacetylacetonat , besonders bevorzugt um Kaliumacetylacetonat, Natriumacetylacetonat.

Bei der Diketoverbindung ist vorzugsweise auch die Reinheit wichtig, sie sollte bei vorzugsweise bei größer 90 Gew.-%, bevorzugt größer 95 Gew.-%, besonders bevorzugt größer 97 Gew.-% liegen.

Sie wird in Mengen von bevorzugt 1,7 bis 2,1 mol pro mol Platinverbindung, besonders bevorzugt von 1,9 bis 2,0 mol pro mol Platinverbindung eingesetzt.

Bei dem Ketolösungsmittel handelt es sich vorzugsweise um Aceton, Methylethylketon, Metehylpropylketon, Methylbutylketon, Cyclohexanon, Diethylketon, Dibutylketon, Aceton, Acetophenon, besonders bevorzugt um Aceton, Methylethylketon.

Das Ketolösungsmittel wird in Mengen von bevorzugt 5 bis 30 ml pro Gramm Platinverbindung, besonders bevorzugt 20 bis 10 ml pro Gramm Platinverbindung eingesetzt.

Die Reaktion muss bei Temperaturen vorzugsweise unter Raumtemperatur durchführen werden, wobei eine Durchführung unter 0°C vorteilhaft ist. Die Reaktionstemperatur beträgt vorzugsweise 10° bis -200°C, bevorzugt 0° bis -90°C, besonders bevorzugt -10° bis -80°C, ganz besonders bevorzugt -10° bis - 50°C.

Die Reaktionszeiten betragen vorzugsweise 5 min bis 90 min, bevorzugt 5 min bis 1 h, besonders bevorzugt 20 min bis 45 min.

Bei dem erfindungsgemäßen Verfahren werden die jeweiligen Verbindungen gerührt und am Ende der Reaktion wird vorzugsweise filtriert. Das Produkt wird anschließend vorzugsweise im Vakuum getrocknet. Wenn auch nach mehrstündigem Trocknen, auch bei erhöhter Temperatur das Ketolösungsmittel nicht restlos entfernbar ist, wird das Produkt vorzugsweise in Alkanen, wie z.B. Pentan, Heptan und ähnlichem suspendiert und nach ca. 2 Std. rühren filtriert und der Niederschlag wiederum im Vakuum getrocknet.

Bevorzugt wird durch das erfindungsgemäße Verfahren Dichlor(norbornadien)platin(II) hergestellt.

Das erfindungsgemäße Verfahren hat den Vorteil, das mit ihm Platin-1,3-diketoverbindungen mit einer Reinheit von bis zu 97,5 % hergestellt werden können und ist somit besonders für die Herstellung von Formkörpern geeignet, die in medizinischen Bereichen oder mit Lebensmitteln in Berührung kommen, wie Verpackungsgefäße, Aufbewahrungsgefäße, Backformen etc.

### Beispiele:

### Vergleichsbeispiel 1:

Im Labor wurden 1,00 g (2,79 mmol) Dichlor(norbornadien)-platin(II) (MG=358,1) und 0,80 g (5,79 mmol) Kaliumacetylacetonat (MG=138,2) in 15 ml Aceton suspendiert, 2 Std. bei Raumtemperatur (RT) gerührt und anschließend filtriert. Das Produkt wurde anschließend im Vakuum getrocknet. Da auch nach mehrstündigem Trocknen, auch bei erhöhter Temperatur das Aceton nicht restlos entfernbar war, wurde das Produkt in 20 ml Heptan suspendiert und nach 2 Std. rühren filtriert und der Niederschlag wiederum im Vakuum getrocknet. Es wurden 0,83 g eines braunfarbenen Pulvers erhalten, was einer Ausbeute von 61 % entspricht.
Im ¹H-NMR-Spektrum mit internen Standard (Benzoltricarbonsäuretrimethylester) wurde die Reinheit der Zielverbindung zu ca. 78% ermittelt. Nebenprodukte waren im Spektrum eindeutig sichtbar, aber nicht identifizierbar.

### Vergleichsbeispiel 2:

Vergleichsbeispiel 1 wurde wiederholt, mit der Abänderung, dass anstelle von Aceton Dichlormethan als Lösungsmittel verwendet wurde. Das erhaltene Pulver war zwar farblich etwas heller aber nicht von höherer Reinheit.

### Vergleichsbeispiel 3-5:

Reinigungsversuche am Produkt aus Versuch 1 bzw. 2 wurden durchgeführt. Zuerst wurden die Produkte mit unterschiedlichen Lösungsmitteln gewaschen, und da diese Behandlung keinen Erfolg zeigte, wurden Umkristallisations-Versuche aus a) Dichlormethen/Pentan, b) THF/Diethylether und c) Aceton/Diethylether durchgeführt. Doch auch dadurch konnte die Reinheit nicht verbessert werden.

### Vergleichsbeispiel 6:

Vergleichsbeispiel 1 wurde wiederholt, aber mit 0,9 g (6,5 mmol) Natriumacetylacetonat Monohydrat. Das erhaltene Zielprodukt wies eine Reinheit von 80,5 % auf.

### Vergleichsbeispiel 7:

Laborversuch 6 wurde wiederholt, aber mit 1,0 g (7,3 mmol) Natriumacetylacetonat Monohydrat. Die Produktreinheit betrug nur ca. 60 %.

### Vergleichsbeispiel 8:

Vergleichsbeispiel 6 wurde wiederholt, mit der Ausnahme, dass die Mischung über Nacht bei RT gerührt wurde. Die Reinheit des Produkts betrug nur ca. 30 %.

### Vergleichsbeispiel 9

Vergleichsbeispiel 1 wurde wiederholt, mit der Änderung, dass 0,80 g Kaliumacetylacetonat Hemihydrat von Fa. Fluka mit einer Reinheit von 97 % eingesetzt wurde. Die Reinheit des erhaltenen Produkts betrug 89,5 %.

### Vergleichsbeispiel 10:

Vergleichsbeispiel 9 wurde wiederholt, allerdings wurde Dichlor(norborandien)platin und Aceton vorgelegt und auf -78°C gekühlt. Anschließend wurde 0,83 g Kaliumacetylacetonat Hemihydrat von Fa. Fluka zugegeben und die Mischung auf RT aufgetaut und 3 Std. bei RT gerührt. Nach Aufarbeitung der Mischung analog Versuch 1 wurde ein creme-farbiges Pulver mit einer Reinheit von 90,9 % erhalten.

### Vergleichsbeispiel 11:

Beispiel 10 wurde wiederholt mit der Änderung, dass 0,87 g Kaliumacetylacetonat Hemihydrat von Fa. Fluka verwendet wurden. Die Reinheit des erhaltenen Produkts betrug 84,7%.

### Beispiel 12:

Beispiel 10 wurde wiederholt, wobei die Mischung nicht 3 Std. bei RT sondern 30 min bei -78 °C gerührt wurde. Die Reinheit des erhaltenen Produkts betrug 97,6 %.

### Beispiel 13:

Beispiel 12 wurde wiederholt, wobei die Reaktionstemperatur auf -20°C gehalten wurde, die Reaktion 45 min betrug und das Lösungsmittel bei 0°C abgezogen wurde. Die Reinheit des erhaltenen Produkts betrug 97,9 %.

### Beispiel 14:

Beispiel 10 wurde wiederholt, wobei die Reaktionstemperatur nach der Kaliumacetylacetonat-Zugabe auf -10°C gehalten wurde, die Reaktion 45 min betrug und das Lösungsmittel wurde anschließend bei ca. -10°C abgezogen wurde. Die Reinheit des erhaltenen Produkts betrug 97,4 %.

## Patentansprüche

1. Verfahren zur Herstellung von Platin-1,3-diketoverbindungen, **dadurch gekennzeichnet, dass** eine Dichlorplatinverbindung und eine Diketoverbindung in einem Ketolösungsmittel 5 min bis 90 min bei unterhalb 10°C gerührt wird und das Reaktionsprodukt isoliert wird.

2. Verfahren zur Herstellung von Platin-1,3-diketoverbindungen nach Anspruch 1, **dadurch gekennzeichnet, dass** die Dichlorplatinverbindung einen aliphatischen oder cyclischen Diolefinrest aufweist.

3. Verfahren zur Herstellung von Platin-1,3-diketoverbindungen nach Anspruch 2, **dadurch gekennzeichnet, dass** der Diolefinrest Norbornadien oder Cyclooctadien ist.

4. Verfahren zur Herstellung von Platin-1,3-diketoverbindungen nach einem oder mehreren der Ansprüche 1 bis 3, **dadurch gekennzeichnet, dass** die Diketoverbindung aus der Gruppe ausgewählt wird, die aus den Diketoverbindungen 2,4-(3-Methyl)pentandionat, 2,4-(3-Phenyl)pentandionat, 3,5-Heptandionat, Kaliumacetylacetonat, Natriumacetylacetonat besteht.

5. Verfahren zur Herstellung von Platin-1,3-diketoverbindungen nach einem oder mehreren der Ansprüche 1 bis 3, **dadurch gekennzeichnet, dass** das Ketolösungsmittel aus der Gruppe ausgewählt wird, die aus Aceton, Methylethylketon, Methylpropylketon, Methylbutylketon, Cyclohexanon, Diethylketon, Dibutylketon, Acetophenon besteht.

## Claims

1. Process for preparing platinum 1,3-diketo compounds, **characterized in that** a dichloroplatinum compound and a diketo compound are stirred in a keto solvent at below 10°C for from 5 minutes to 90 minutes and the reaction product is isolated.

2. Process for preparing platinum 1,3-diketo compounds according to Claim 1, **characterized in that** the dichloroplatinum compound has an aliphatic or cyclic diolefin radical.

3. Process for preparing platinum 1,3-diketo compounds according to Claim 2, **characterized in that** the diolefin radical is norbornadiene or cyclooctadiene.

4. Process for preparing platinum 1,3-diketo compounds according to one or more of Claims 1 to 3, **characterized in that** the diketo compound is selected from the group consisting of the diketo compounds 2,4-(3-methyl)pentanedionate, 2,4-(3-phenyl)pentanedionate, 3,5-heptanedionate, potassium acetylacetonate, sodium acetylacetonate.

5. Process for preparing platinum 1,3-diketo compounds according to one or more of Claims 1 to 3, **characterized in that** the keto solvent is selected from the group consisting of acetone, methyl ethyl ketone, methyl propyl ketone, methyl butyl ketone, cyclohexanone, diethyl ketone, dibutyl ketone, acetophenone.

## Revendications

1. Procédé de préparation de composés platine-1,3-dicéto, **caractérisé en ce qu'**un composé dichloroplatine et un composé dicéto sont agités dans un solvant céto en dessous de 10 °C pendant de 5 minutes à 90 minutes et le produit de réaction est isolé.

2. Procédé de préparation de composés platine-1,3-dicéto selon la revendication 1, **caractérisé en ce que** le composé dichloroplatine renferme un radical dioléfinique, aliphatique ou cyclique.

3. Procédé de préparation de composés platine-1,3-dicéto selon la revendication 2, **caractérisé en ce que** le radical dioléfinique est le norbornadiène ou le cyclo-octadiène.

4. Procédé de préparation de composés platine-1,3-dicéto selon l'une ou plusieurs des revendications 1 à 3, **caractérisé en ce que** le composé dicéto est choisi parmi le groupe qui est constitué des composés dicéto 2,4-(3-méthyl)pentanedionate, 2,4-(3-phényl)pentanedionate, 3,5-heptanedionate, acétylacétonate de potassium, acétylacétonate de sodium.

5. Procédé de préparation de composés platine-1,3-dicéto selon l'une ou plusieurs des revendications 1 à 3, **caractérisé en ce que** le solvant céto est choisi parmi le groupe qui est constitué de l'acétone, de la méthyléthylcétone, de la méthylpropylcétone, de la méthylbutylcétone, de la cyclohexanone, de la diéthylcétone, de la dibutylcétone, et de l'acétophénone.
